# EUROPÄISCHE PATENTSCHRIFT

(11) **EP 0 499 869 B1**
(45) Veröffentlichungstag und Bekanntmachung des Hinweises auf die Patenterteilung: **20.09.1995**
(21) Anmeldenummer: 92101785.1
(22) Anmeldetag: 04.02.1992
(51) Int. Cl.: H02M 7/48, H04M 19/02

(54) **Schaltungsanordnung zur Erzeugung einer Wechselspannung**
Circuitry for production of an alternating voltage
Circuit pour génération de tension alternative

(30) Priorität: 16.02.1991 DE 4104809
(43) Veröffentlichungstag der Anmeldung: 26.08.1992
(73) Patentinhaber: KE KOMMUNIKATIONS-ELEKTRONIK GMBH & CO, D-30179 Hannover (DE)
(72) Erfinder: Brahms, Martin, Dipl.-Ing., W-3000 Hannover 91 (DE); Prenner, Christian, Dipl.-Ing., W-3012 Langenhagen (DE)
(74) Vertreter: Döring, Roger, Dipl.-Ing.

(56) Entgegenhaltungen:
- EP-A- 0 013 332
- EP-A- 0 375 250
- DE-A- 3 632 746
- US-A- 3 869 658

## Beschreibung

Die Erfindung betrifft eine Schaltungsanordnung zur Erzeugung einer Wechselspannung in einem über eine Fernspeisung an eine Gleichspannung angeschlossenen elektronischen Gerät, bei welcher in dem Gerät ein Stromversorgungsteil und ein Taktgeber angeordnet sind, dessen Impulse über ein Steuerglied der Steuerelektrode eines ersten Transistors zugeführt werden, in dessen Strompfad die an eine Speisespannung angeschlossene Primärwicklung eines Transformators liegt, bei welcher an die Sekundärwicklung des Transformators mindestens ein Ladekondensator und mindestens eine Diode sowie mindestens ein mit einem Koppelkondensator ausgerüsteter, externer Verbraucher angeschlossen sind und bei welcher parallel zu dem Verbraucher ein den Momentanwert der Spannung an demselben als Istwert erfassender Spannungsteiler angeschlossen ist, mit dessen Teilerpunkt ein Komparator verbunden ist, dem als Sollwert eine Referenzspannung zugeführt wird und dessen Ausgang mit dem Steuerglied verbunden ist. Eine solche Schaltungsanordnung ist aus DE-A-3 632 746 bekannt.

Bei der mit dieser Schaltungsanordnung erzeugten Wechselspannung handelt es sich um eine mit einem Wechselanteil überlagerte Gleichspannung. Eine zur Erzeugung einer solchen Wechselspannung geeignete Schaltungsanordnung kann beispielsweise zur Erzeugung der Rufspannung bei dem sogenannten "PCM 2"-Verfahren verwendet werden, bei dem zwei Teilnehmer eines Fernmeldenetzes gemeinsam über nur eine Anschlußleitung mit dem Amt verbunden sind. Die weiteren Erläuterungen werden - stellvertretend für alle möglichen anderen Anwendungsfälle der Erfindung - für dieses System gemacht. Die Buchstaben "PCM" stehen für die Worte Puls-Code-Modulation. Mit dem entsprechenden Verfahren werden nachrichtentechnische Signale als digitale Signale übertragen. Dazu werden analog Signale im Amt digitalisiert und auf die Anschlußleitung gegeben. Am Ende der Anschlußleitung ist ein Gerät installiert, durch das die ankommenden digitalen Signale wieder in analoge Signale umgesetzt werden. Das gilt selbstverständlich auch für die Gegenrichtung. An das Gerät sind die beiden Teilnehmer mit Verbindungsleitungen angeschlossen.

Wegen der digitalen Übertragung der Signale können beide Teilnehmer ohne gegenseitige Störung gleichzeitig telefonieren. Die beiden Signalströme werden dabei in bekannter Technik am Anfang der Anschlußleitung "verschachtelt" und am Ende derselben wieder getrennt. Da die Rufspannung wegen der digitalen Signalübertragung nicht über die Anschlußleitung übertragen werden kann, muß sie im Gerät erzeugt werden.

Eine dafür prinzipiell geeignete Anordnung geht aus der EP-A-0 375 250 hervor. In dieser Druckschrift ist ein elektronischer Generator zur Erzeugung einer Rufspannung beschrieben, der einen an eine Gleichspannung angeschlossenen Transformator aufweist. In Reihe mit den beiden Wicklungen des Transformators liegt jeweils ein MOSFET. Jeweils einer der MOSFETS wird impulsweise stromdurchlässig geschaltet, so daß auf der Sekundärseite des Transformators nach Gleichrichtung ein Kondensator einerseits aufgeladen und nach Erreichen eines vorgegebenen Spannungswerts wieder entladen wird. Jedem der beiden MOSFETS ist ein "switch controller" zugeordnet, durch welchen jeweils die Stromdurchlässigkeit der MOSFETS gesteuert wird. Den beiden "switch controllern" werden der aktuelle Spannungspegel auf der Sekundärseite des Transformators, eine Referenzspannung und der über den jeweiligen MOSFET fließende Strom als Signale zugeführt. Der eine "switch controller" ist außerdem über eine Offsetspannung mit der Referenzspannung verbunden.

Bei der Schaltungsanordnung nach der eingangs erwähnten DE-A-3 632 746 ist außer den geschilderten Elementen eine Entladeschaltung mit einem Entladetransistor für Koppel- und Ladekondensator vorgesehen. Dabei kann der Entladestrom über eine im Strompfad des Entladetransistors liegende Diode zur Primärseite des Transformators zurückgeführt oder direkt nach Masse abgeleitet werden. Der Wirkungsgrad dieser Schaltungsanordnung ist ohne den Einsatz der Diode nicht optimal, da zu viel Energie vernichtet wird. Mit Diode wird der Wirkungsgrad der Schaltungsanordnung zwar verbessert, jedoch ist dieselbe dann nur mit relativ niedriger Spannung betreibbar.

Der Erfindung liegt die Aufgabe zugrunde, die eingangs geschilderte Schaltungsanordnung so weiterzubilden, daß sie bei beliebig hohen Speisespannungen mit hohem Wirkungsgrad betrieben werden kann.

Diese Aufgabe wird gemäß der Erfindung dadurch gelöst,
- daß der Transformator mit seiner Primärwicklung an die Gleichspannung der Fernspeisung angeschlossen ist,
- daß in Reihe mit der Sekundärwicklung des Transformators ein zweiter Transistor mit seinem Strompfad angeschlossen ist, dessen Steuerelektrode ebenfalls mit dem Steuerglied verbunden ist,
- daß dem Steuerglied eine aus zwei parallel zueinander liegenden "UND"-Verknüpfungen, von denen jeweils eine mit der Steuerelektrode eines der beiden Transistoren verbunden ist, bestehende Logik zugeordnet ist, durch welche wahlweise immer nur einer der beiden Transistoren mit dem Taktgeber verbunden wird und
- daß zwischen dem Komparator und dem Steuerglied ein Inverter eingeschaltet ist.

Der Ladekondensator und der Koppelkondensator des Verbrauchers werden wie bei der bekannten Schaltungsanordnung über den Transformator aufgeladen. Entladen werden dieselben mit dieser Schaltungsanordnung ebenfalls über den Transformator, und zwar durch den Einsatz des zweiten Transistors, der in Reihe mit der Sekundärwicklung des Transformators liegt. Da der zweite Transistor durch den Taktgeber impulsweise stromdurchlässig geschaltet wird, wird die beim Entladen von Koppel- und Ladekondensator abzubauende Energie der Primärseite des Transformators wieder zugeführt. Die Schaltungsanordnung arbeitet daher mit hohem Wirkungsgrad. Sie kann mit höherer Speisespannung betrieben werden.

Vorteilhafte Ausgestaltungen der Erfindung gehen aus den Unteransprüchen hervor.

Ein Ausführungsbeispiel des Erfindungsgegenstandes ist in den Zeichnungen dargestellt.

Es zeigen:

Fig. 1 als Blockschaltbild die Teile eines ferngespeisten Gerätes mit einer Schaltungsanordnung nach der Erfindung.

Fig. 2 die Schaltungsanordnung selbst.

Fig. 3 einen Ausschnitt der Schaltungsanordnung nach Fig. 2 in einer Abwandlung derselben.

Am Ende einer beispielsweise durch eine Fernmelde-Anschlußleitung ASL gebildeten Übertragungsstrecke ist ein durch eine strichpunktierte Linie umrandetes Gerät 1 angeschlossen. Das Gerät 1 wird beispielsweise mit einer Spannung von 93 V über die Anschlußleitung ASL ferngespeist. An die ASL ist ein Stromversorgungsteil 2 angeschlossen, bei dem es sich beispielsweise um ein Schaltnetzteil handeln kann. Es dient unter anderem zur Stromversorgung der durch ein Kästchen angedeuteten Elektronik 3 des Geräts 1. In dem Gerät 1 ist weiterhin eine Schaltungsanordnung 4 zur Erzeugung einer Wechselspannung angeordnet, die mit der ASL und der Elektronik 3 verbunden ist. An die Schaltungsanordnung 4 ist ein externer Verbraucher 5 angeschlossen.

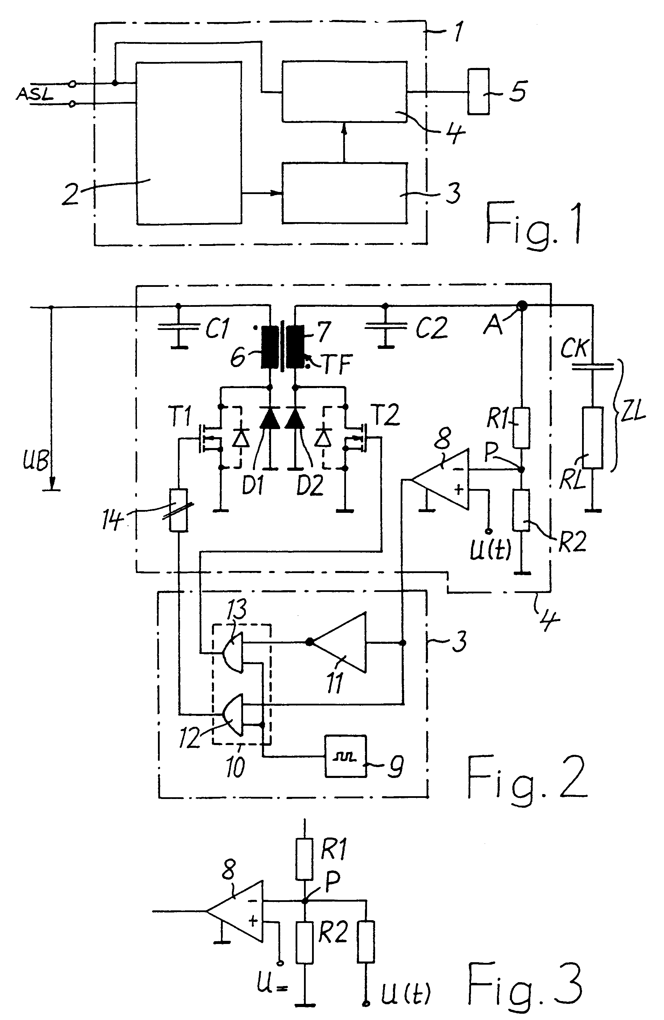

Die Schaltungsanordnung 4 ist in Fig. 2 genauer dargestellt. Sie wird am Beispiel des PCM 2-Systems erläutert, wobei statt des Wortes "Wechselspannung" das Wort "Rufspannung" verwendet wird. Der Verbraucher 5 ist dabei der Wecker eines Telefonapparates, der durch einen Koppelkondensator CK und einen Widerstand (Last) RL realisiert ist, die zusammen die Weckerimpedanz ZL bilden.

Die Schaltungsanordnung 4 weist einen Transformator TF mit einer Primärwicklung 6 und einer Sekundärwicklung 7 auf. Der Transformator TF ist mit seiner Primärwicklung 6 an die ASL angeschlossen, deren Spannung der Gleichspannung UB der Fernspeisung entspricht. An die Primärwicklung 6 sind ein Kondensator C1, eine Diode D1 und ein erster Transistor T1 angeschlossen, dessen Steuerelektrode mit der Elektronik 3 des Gerätes 1 verbunden ist.

An die Sekundärwicklung 7 des Transformators TF sind eine Diode D2, ein zweiter Transistor T2, dessen Steuerelektrode ebenfalls mit der Elektronik 3 des Geräts 1 verbunden ist, ein Ladekondensator C2 und die Weckerimpedanz ZL sowie ein Spannungsteiler angeschlossen, der aus den Widerständen R1 und R2 besteht. Mit dem Teilerpunkt P des Spannungsteilers ist ein Komparator 8 verbunden, dem über seinen zweiten Eingang eine Referenzspannung U(t) zugeführt wird. Die Referenzspannung U(t) ist eine mit einem Wechselanteil überlagerte Gleichspannung. Sie wird - unter Berücksichtigung der durch die Widerstände R1 und R2 gegebenen Teilung - so bemessen, daß am Punkt A stets die gewünschte Spannung anliegt. Der Ausgang des Komparators 8 ist mit der Elektronik 3 des Gerätes 1 verbunden, welche mit einer Logik ausgerüstet ist, durch welche wahlweise immer nur einer der Transistoren T1 oder T2 beaufschlagt wird.

In der Elektronik 3 sind ein Taktgeber 9, ein Stellglied 10 und ein Inverter 11 angeordnet. Stellglied 10 und Inverter 11 sind Teile der Logik der Elektronik 3. In dem Stellglied 10 sind zwei parallel zueinander liegende UND-Verknüpfungen 12 und 13 enthalten, die mit einem ihrer Eingänge jeweils mit dem Taktgeber 9 und mit dem anderen Eingang jeweils mit dem Inverter 11 verbunden sind. An den Ausgang der UND-Verknüpfung 12 ist die Steuerelektrode des Transistors T1 angeschlossen, während die Steuerelektrode des Transistors T2 mit der UND-Verknüpfung 13 verbunden ist. Zur galvanischen Entkopplung kann zwischen dem ersten Transistor T1 und dem Steuerglied 10 ein nur schematisch angedeuteter Optokoppler 14 eingeschaltet sein. Von dem Taktgeber 9 werden beispielsweise Impulse von 64 kHz abgeleitet. Der so beschriebene Teil der Elektronik ist zum einfachen Verständnis der Wirkungsweise der Erfindung als sehr vereinfachtes Ausführungsbeispiel dargestellt und erläutert.

Die Dioden D1 und D2 arbeiten als Gleichrichter. Wenn als Transistoren T1 und T2 Feldeffekttransistoren verwendet werden, dann können deren in Fig. 2 gestrichelt eingezeichnete Substratdioden auch die Funktion der Dioden D1 und D2 übernehmen. Auf die Dioden D1 und D2 kann dann verzichtet werden.

Die Schaltungsanordnung nach der Erfindung arbeitet wie folgt:

Eine Rufspannung von beispielsweise 25 bis 35 V effektiv mit 25 oder 50 Hz wird im Falle eines beim Amt ankommenden Anrufs für einen Teilnehmer, bei welchem das am Gerät 1 angeschlossene Telefon installiert ist, durch ein vom Amt ausgesendetes Signal erzeugt. Bei dem Signal kann es sich um ein Bit des vom Amt zum Teilnehmer übermittelten Datenstroms handeln. Der Datenstrom wird im Gerät 1 empfangen und in demselben in der Elektronik 3 verarbeitet.

Nach Empfang eines über die Anschlußleitung ASL kommenden, vom Amt ausgesandten Signals beginnt der Taktgeber 9 Impulse auszusenden. Diese Impulse werden von der UND-Verknüpfung 12 des Steuergliedes 10 durchgelassen und der Steuerelektrode des Transistors T1 zugeführt. Die UND-Verknüpfung 13 läßt während dieser Zeit die Impulse des Taktgebers 9 nicht durch. Sie ist durch den Inverter 11 gesperrt, dem vom Komparator 8 ein entsprechendes Signal zugeführt wird. Der Komparator 8 gibt dabei an seinem Ausgang beispielsweise eine logische "1" ab. Durch die Impulse des Taktgebers 9 wird der Transistor T1 in dauerndem Wechsel Stromdurchlässig und stromundurchlässig geschaltet. Die dadurch von der Primärwicklung 6 des Transformators TF in der Sekundärwicklung 7 induzierte Spannung lädt nach Gleichrichtung durch die Diode D2 den Ladekondensator C2 und den Koppelkondensator CK auf.

Die an den Kondensatoren C2 und CK und damit auch am Punkt A anliegende Spannung wird dauernd durch den Spannungsteiler R1/R2 erfaßt und dem Komparator 8 als Istwert (Teilerpunkt P) zugeführt. Wenn dieser Istwert am Teilerpunkt P den durch die dem Komparator 8 zugeführte Referenzspannung U(t) gegebenen Sollwert überschreitet, erscheint am Ausgang des Komparators 8 eine logische "0". Das Steuerglied 10 wird dann durch seine Logik umgeschaltet, so daß die Impulse des Taktgebers 9 nicht mehr zum Transistor T1 gelangen. Der Ladevorgang für die Kondensatoren C2 und CK ist damit beendet.

Wenn am Ausgang des Komparators 8 - wie beschrieben - statt der logischen" 1" die logische "0" ansteht, wird die UND-Verknüpfung 12 durch den Inverter 11 gesperrt. Gleichzeitig wird die UND-Verknüpfung 13 durchgeschaltet, so daß die Impulse des Taktgebers 9 jetzt der Steuerelektrode des Transistors T2 zugeführt werden, der ebenso aufgebaut sein kann, wie der Transistor T1. Es wird jetzt also der Transistor T2 abwechselnd stromdurchlässig und stromundurchlässig geschaltet. Die dadurch in der Primärwicklung 6 des Transformators TF induzierte Spannung lädt nach Gleichrichtung durch die Diode D1 den auf der Primärseite befindlichen Kondensator C1 auf. Der Ladekondensator C2 und der Koppelkondensator CK werden dadurch entladen. Ihre Energie geht also nicht verloren. Sie steht vielmehr der Primärseite des Transformators TF wieder zur Verfügung.

Durch das Entladen von Koppel- und Ladekondensator sinkt die an denselben anliegende Spannung. Dadurch sinkt auch das Potential am Teilerpunkt P. Sobald der vorgegebene Sollwert der Spannung am Punkt A und damit auch am Teilerpunkt P unterschritten ist, ändert sich das Ausgangssignal des Komparators 8 wieder in eine logische "1". Der Entladevorgang ist damit beendet. Die beiden Kondensatoren C2 und CK werden jetzt wie eingangs beschrieben wieder aufgeladen.

Die Referenzspannung U(t) als Sollwert für den Komparator 8 kann nach Fig. 3 auch am Teilerpunkt P anliegen. Der Komparator 8 ist dann mit seinem zweiten Eingang an eine konstante Gleichspannung von beispielsweise 2,5 V angeschlossen.

## Patentansprüche

1. Schaltungsanordnung (4) zur Erzeugunq einer Wechselspannung in einem über eine Fernspeisung an eine Gleichspannung (UB) angeschlossenen elektronischen Gerät (1), bei welcher in dem Gerät (1) ein Stromversorgungsteil (2) und ein Taktgeber (9) angeordnet sind, dessen Impulse über ein Steuerglied (10) der Steuerelektrode eines ersten Transistors (T1) zugeführt werden, in dessen Strompfad die an eine Speisespannung (UB) angeschlossene Primärwicklung (6) eines Transformators (TF) liegt, bei welcher an die Sekundärwicklung (7) des Transformators (TF) mindestens ein Ladekondensator (C2) und mindestens eine Diode (D2) sowie mindestens ein mit einem Koppelkondensator (CK) ausgerüsteter, externer Verbraucher (5) angeschlossen sind und bei welcher parallel zu dem Verbraucher (5) ein den Momentanwert der Spannung an demselben als Istwert erfassender Spannungsteiler angeschlossen ist, mit dessen Teilerpunkt ein Komparator (8) verbunden ist, dem als Sollwert eine Referenzspannung zugeführt wird und dessen Ausgang mit dem Steuerglied (10) verbunden ist, dadurch gekennzeichnet,
- daß der Transformator (TF) mit seiner Primärwicklung (6) an die Gleichspannung der Fernspeisung angeschlossen ist,
- daß in Reihe mit der Sekundärwicklung (7) des Transformators (TF) ein zweiter Transistor (T2) mit seinem Strompfad angeschlossen ist, dessen Steuerelektrode ebenfalls mit dem Steuerglied (10) verbunden ist,
- daß dem Steuerglied (10) eine aus zwei parallel zueinander liegenden "UND"-Verknüpfungen (12,13), von denen jeweils eine mit der Steuerelektrode eines der beiden Transistoren (T1,T2) verbunden ist, bestehende Logik zugeordnet ist, durch welche wahlweise immer nur einer der beiden Transistoren (T1,T2) mit dem Taktgeber (9) verbunden wird und
- daß zwischen dem Komparator (8) und dem Steuerglied (10) ein Inverter (11) eingeschaltet ist.

2. Schaltungsanordnung nach Anspruch 1, dadurch gekennzeichnet, daß die beiden Transistoren (T1,T2) als Feldeffekttransistoren ausgebildet sind, vorzugsweise als MOSFETs.

3. Schaltungsanordnung nach Anspruche 1 oder 2, dadurch gekennzeichnet, daß als Diode im Stromkreis der Sekundärwicklung (7) des Transformators (TF) die Substratdiode des zweiten, als Feldeffekttransistor ausgebildeten Transistors (T2) verwendet wird.

4. Schaltungsanordnung nach einem der Ansprüche 1 bis 3, dadurch gekennzeichnet, daß zwischen Steuerglied (10) und erstem Transistor (T1) ein Optokoppler (14) eingeschaltet ist.

## Claims

1. Circuit arrangement (4) for producing an AC voltage in an electronic appliance (1), which is connected via a remote supply to a DC voltage (UB) and in which a power supply section (2) and a clock generator (9) are arranged in the appliance (1), the pulses from which clock generator (9) are supplied via a control element (10) to the control electrode of a first transistor (T1) in whose current path the primary winding (6), which is connected to a supply voltage (UB), of a transformer (TF) is located, in the case of which circuit arrangement (4) at least one charge capacitor (C2) and at least one diode (D2) as well as at least one external load (5), which is equipped with a coupling capacitor (CK), are connected to the secondary winding (7) of the transformer (TF), and in the case of which circuit arrangement (4) a voltage divider, which detects the instantaneous value of the voltage on the load (5) as an actual value, is connected in parallel with the load (5), a comparator (8) being connected to the divider point of said voltage divider, to which comparator (8) a reference voltage is supplied as a required value and whose output is connected to the control element (10), characterized
- in that the primary winding (6) of the transformer (TF) is connected to the DC voltage of the remote supply,
- in that a second transistor (T2) is connected with its current path in series with the second winding (7) of the transformer (TF), and the control electrode of said second transistor (T2) is likewise connected to the control element (10),
- in that a logic element is assigned to the control element (10), which logic element comprises two mutually parallel "AND" gates (12,13) of which in each case one is connected to the control electrode of one of the two transistors (T1,T2), through which logic element only one of the two transistors (T1,T2) is always selectively connected to the clock generator (9), and
- in that an invertor (11) is connected between the comparator (8) and the control element (10).

2. Circuit arrangement according to Claim 1, characterized in that the two transistors (T1,T2) are configured as field-effect transistors, preferably as MOSFETs.

3. Circuit arrangement according to Claim 1 or 2, characterized in that the substrate diode of the second transistor (T2), which is configured as a field-effect transistor, is used as a diode in the circuit of the secondary winding (7) of the transformer (TF).

4. Circuit arrangement according to one of Claims 1 to 3, characterized in that an optocoupler (14) is connected between the control element (10) and the first transistor (T1).

## Revendications

1. Circuit (4) servant à générer une tension alternative dans un appareil électronique (1) raccordé par l'intermédiaire d'une alimentation a distance à une tension continue (UB), circuit dans le cas duquel sont disposés dans l'appareil (1) une partie (2) pour l'alimentation en courant et un générateur d'impulsions (9) dont les impulsions sont amenées par l'intermédiaire d'un organe de manoeuvre (10) à l'éléctrode de commande d'un premier transistor (T1), sur le trajet du courant duquel se trouve l'enroulement primaire (6) raccordé à une tension d'alimentation (UB) d'un transformateur (TF) et dans le cas duquel sont raccordés à l'enroulement secondaire (7) du transformateur (TF) au moins un condensateur de lissage (2) et au moins une diode (D2) ainsi qu'au moins un appareil externe consommateur de courant (5), équipé d'un condensateur de liaison (CK) et dans le cas duquel un diviseur de tension est raccordé paral lelement au consommateur, diviseur que détecte la valeur instantanée de la tension sur celui-ci en tant que valeur réelle et au point de division duquel est relié un comparateur (8) auquel est amené en tant que valeur de consigne une tension de référence et dont la sortie est reliée à l'origine de manoeuvre (10), circuit caractérisé en ce que :
- le transformateur (TF) est raccordé par son enroulement primaire (6) à la tension continue de l'alimentation a distance.
- en série avec l'enroulement secondaire (7) du transformateur (TF) on raccorde un second transistor (T2) par son trajet de courant, transistor dont l'électrode de commande est également reliée à l'organe de manoeuvre (10).
- on associe à l'organe de manoeuvre (10) un circuit logique consistant en deux fonctions logiques (12,13) "ET" montées en parallèle l'une par rapport à l'autre, dont l'une est respectivement reliée à l'électrode de commande de l'un des deux transistors (T1,T2,) circuit logique par lequel on relie toujours un seul des deux transistors (T1,T2) au générateurs d'impulsions (9), et
- entre le comparateur (8) et l'organe de manoeuvre (10) on monte un inverseur (11).

2. Circuit selon la revendication 1, caractérisé en ce que les deux transistors (T1,T2) sont constitués sous la forme de transistors a effet de champs de préférence en tant que MOSFET (transistor à effet de champ à grille isolée par oxyde métallique).

3. Circuit selon les revendications 1 ou 2, caractérisé en ce que l'on utilise comme diode dans le circuit de l'enroulement secondaire (7) du transformateur (TF) la diode à substrat du second transistor (T2) constitué sous la forme d'un transistor à effet de champ.

4. Circuit selon les revendications 1 à 3, caractérisé en ce qu'entre l'organe de manoeuvre (10) et le premier transistor (T1) on branche un coupleur opto-électronique (14).
